# EUROPÄISCHE PATENTSCHRIFT

(11) **EP 4 123 159 B1**
(45) Veröffentlichungstag und Bekanntmachung des Hinweises auf die Patenterteilung: **05.03.2025**
(21) Anmeldenummer: 21187252.8
(22) Anmeldetag: 22.07.2021
(51) Int. Cl.: F03B 17/06, F03B 11/08

(54) **SAUGMANTELVORRICHTUNG UND KINETISCHES STRÖMUNGSKRAFTWERK**
SUCTION SLEEVE DEVICE AND KINETIC FLOW POWER PLANT
DISPOSITIF D'ENVELOPPE D'ASPIRATION ET CENTRALE HYDROLIENNE CINÉTIQUE

(43) Veröffentlichungstag der Anmeldung: 25.01.2023
(73) Patentinhaber: Energyminer GmbH, 82266 Inning am Ammersee (DE)
(72) Erfinder: ECKL, Richard, 82266 Inning am Ammersee (DE)
(74) Vertreter: Isarpatent

(56) Entgegenhaltungen:
- EP-A1- 1 747 373
- WO-A1-2012/135638
- CN-A- 103 032 257
- DE-A1- 19 626 360
- DE-U1- 202012 002 133

## Beschreibung

Die vorliegende Erfindung betrifft eine Saugmantelvorrichtung für ein kinetisches Strömungskraftwerk sowie ein kinetisches Strömungskraftwerk mit einer solchen Saugmantelvorrichtung.

Um den stetig steigenden Bedarf an Energie zu decken, wird weltweit an Methoden zur Energiegewinnung entwickelt. Dabei wächst gleichzeitig das Bedürfnis, die Energiegewinnung möglichst umweltfreundlich zu gestalten, damit die Natur weniger Schaden nimmt. Bei diesen Anforderungen spielt die Wasserkraft eine bedeutende Rolle als erneuerbare Energiequelle.

Bisher wird Strom nahezu ausschließlich aus künstlich gestautem Wasser, zumeist in Flusstälern, in je nach Fallhöhe schnell oder langsam laufenden Turbinen erzeugt. Auf diese Weise findet ein starker Eingriff in die Natur statt, da unter anderem für Fische die Staumauern eine kaum zu überwindende Hürde bilden oder Wassertiere durch die Generatoren hindurch geschleust werden. Ein weiterer Ausbau mit solchen Kraftwerken ist daher aus verschiedenen Gründen nicht mehr gewünscht, oder nur schwer und teuer und gegen viele Widerstände möglich.

Eine alternative Möglichkeit der Nutzung von Wasserkraft besteht darin, Elektrizität in einem Fließgewässer zu erzeugen, ohne dabei ein Wehr, wie etwa eine Staumauer, zu bauen. Dies wird beispielsweise mit sogenannten Strom-Bojen versucht, die ein schwimmendes Strömungskraftwerk ausbilden, welches die kinetische Energie eines frei fließenden, ungestauten Flusses in elektrische Energie umsetzt, wobei die Strom-Boje leicht unterhalb der Wasseroberfläche schwimmt.

Beispielsweise beschreibt die EP 1 747 373 A1 eine Freistromturbinenanlage zur Erzeugung elektrischer Energie in frei fließenden Gewässern mit langsam laufenden, axial beaufschlagten Turbinenlaufrädern mit einem Generator in einem ringförmigen Schwimmkörper. Weiter ist in der WO 2012/135638 A1 eine ummantelte Fluidturbine beschrieben, bei der die Neigung mindestens eines Teils des Mantels variabel oder einstellbar ist.

Jedoch benötigen bekannte kinetische Wasserkraftwerke eine relativ hohe Fließgeschwindigkeit von rund zwei Metern pro Sekunde, um eine signifikante Leistung zu erzielen und um wirtschaftlich nutzbar zu sein.

Es ist Aufgabe der vorliegenden Erfindung, eine Saugmantelvorrichtung bereitzustellen, welche die Einsatzmöglichkeiten für ein kinetisches Strömungskraftwerk erhöht.

Erfindungsgemäß wird diese Aufgabe jeweils durch die Gegenstände der unabhängigen Ansprüche gelöst.

Gemäß einem ersten Aspekt der Erfindung ist eine Saugmantelvorrichtung für ein kinetisches Strömungskraftwerk gemäß Aspruch 1 vorgesehen.

Gemäß einem zweiten Aspekt der Erfindung ist ein kinetisches Strömungskraftwerk vorgesehen. Das Strömungskraftwerk umfasst einen Strömungsgenerator und eine Rechenvorrichtung, welche entlang einer Strömungsrichtung stromaufwärts vor einem Strömungseinlass des Strömungsgenerators angeordnet und dazu ausgebildet ist, den Strömungsgenerator vor festen Fremdkörpern zu schützen. Darüber hinaus umfasst das Strömungskraftwerk eine erfindungsgemäße Saugmantelvorrichtung, welche stromabwärts des Strömungsgenerators angeordnet ist und deren Strömungseinlassöffnung mit den Außenmaßen des Strömungsgenerators korrespondiert.

Eine der vorliegenden Erfindung zugrunde liegende Idee besteht darin, eine variabel verstellbare Saugmantelvorrichtung bereitzustellen, die sich in Abhängigkeit einer Strömungsgeschwindigkeit des die Saugmantelvorrichtung anströmenden Fluids derart einstellt, dass die Strömungsgeschwindigkeit im Inneren der Saugmantelvorrichtung, insbesondere an der Strömungseinlassöffnung, im Vergleich zur Strömungsgeschwindigkeit des anströmenden Fluids geringer von einem vorbestimmten Wert abweicht. Somit kann die Saugmantelvorrichtung beispielsweise die Strömungsgeschwindigkeit für ein in der Strömungseinlassöffnung anordenbares Strömungskraftwerk in einem gewünschten Geschwindigkeitsbereich bereitstellen, unabhängig von der Strömungsgeschwindigkeit des anströmenden Fluids. Insbesondere ist es dadurch möglich, einen optimalen Betriebspunkt des Strömungskraftwerks zu bewirken.

Die Strömungsrichtung im Sinne der vorliegenden Erfindung ist definiert als die vorbestimmte Richtung der Strömung eines Fluids von der Strömungseinlassöffnung zu der Strömungsauslassöffnung. Das bedeutet, dass die Strömungsrichtung der Längsrichtung der Saugmantelvorrichtung entspricht. Zusätzlich korrespondiert die Längsrichtung der Saugmantelvorrichtung mit der Längsrichtung des kinetischen Strömungskraftwerks, das heißt der Begriff Längsrichtung im Sinne der vorliegenden Erfindung trifft sowohl auf die Saugmantelvorrichtung als auch auf das Strömungskraftwerk zu.

Der Begriff Extremalstellung bezeichnet einen Zustand der mehreren Mantelgehäusesegmente, in welchem die Beweglichkeit der relativ zueinander beweglichen Mantelgehäusesegmente der mehreren Mantelgehäusesegmente in zumindest einer Bewegungsrichtung eingeschränkt ist. Das bedeutet, dass zum Beispiel zwei aufeinanderzu schwenkende Mantelgehäusesegmente bis zum Kontakt miteinander verschwenkt sind und somit in diesem Zustand lediglich voneinanderweg schwenkbar sind. Die Extremalstellung liegt ebenso vor, wenn die Bewegungsrichtung durch dritte Komponenten, wie etwa den begrenzten Hub eines Dämpfers oder einer Feder oder sonstige bewegungssperrende Einrichtungen, blockiert ist. Dabei weisen die mehreren Mantelgehäusesegmente insbesondere auch dann eine Extremalstellung auf, wenn lediglich ein Freiheitsgrad vorgesehen ist und innerhalb dieses Freiheitsgrades eine der beiden Bewegungsrichtungen, zum Beispiel eine lineare Bewegung nach links im Gegensatz zur linearen Bewegung nach rechts blockiert ist.

Vorteilhafte Ausführungsformen und Weiterbildungen ergeben sich aus den auf die unabhängigen Ansprüche rückbezogenen Unteransprüchen sowie aus der Beschreibung unter Bezugnahme auf die Figuren.

Gemäß einer Ausführungsform ist die Saugmantelvorrichtung quer zu der Strömungsrichtung betrachtet oval, kreisförmig oder dergleichen ausgebildet. Auf diese Weise weist die Saugmantelvorrichtung eine für Druckbelastungen geeignete Form auf.

Erfindungsgemäß sind zumindest einige der mehreren Mantelgehäusesegmente aus einem elastischen Material hergestellt, wobei die elastischen Mantelgehäusesegmente bei einer ansteigenden Strömungsgeschwindigkeit zunehmend elastisch verformt werden und sich bei einer sinkenden Strömungsgeschwindigkeit reversibel zurückformen. Der Verformungsgrad kann dabei durch die Eigenschaften der Materialzusammensetzung und der Dimensionierung, insbesondere durch die Materialstärke, an vorbestimmte Strömungsgeschwindigkeiten festgelegt sein.

Gemäß einer Weiterbildung der Saugmantelvorrichtung verändert sich die Materialzusammensetzung und/oder die Geometrie der elastischen Mantelgehäusesegmente entlang ihrer Erstreckung derart, dass die Federkonstante dieser elastischen Mantelgehäusesegmente entlang ihrer Erstreckung variiert. Auf diese Weise kann die Verformung der elastischen Mantelgehäusesegmente dahingehend optimiert werden, dass sich bestimmte Abschnitte im Vergleich zu anderen Abschnitten der Mantelgehäusesegmente deutlicher beziehungsweise geringer verformen.

Gemäß einer weiteren Ausführungsform weist die Saugmantelvorrichtung ferner eine Federeinrichtung und/oder einen Aktuator zum Unterstützen der Beweglichkeit der mehreren Mantelgehäusesegmente zwischen der ersten und der zweiten Extremalstellung auf, wobei die Federeinrichtung und/oder der Aktuator zumindest einige der mehreren Mantelgehäusesegmente untereinander koppelt. Somit kann beispielsweise der Aktuator die Mantelgehäusesegmente aktiv und unabhängig von der Strömungsgeschwindigkeit bewegen. Darüber hinaus können bestimmte Bewegungen der Mantelgehäusesegmente in Abhängigkeit von der Strömungsgeschwindigkeit beispielsweise durch die Federeinrichtung verringert werden, da die Federeinrichtung ausgehend von einer optimalen Stellung mit ihrer Federkraft Abweichungen von der optimalen Stellung entgegenwirkt.

Gemäß einer weiteren Ausführungsform der Saugmantelvorrichtung sind die mehreren Mantelgehäusesegmente im Wesentlichen entlang der Strömungsrichtung relativ zueinander beweglich vorgesehen. Somit kann sich die Saugmantelvorrichtung in Längsrichtung länger oder kürzer erstrecken. Dabei können ab einer Zwischenstellung der mehreren Mantelgehäusesegmente der Saugmantelvorrichtung Aussparungen/Lücken zwischen den Mantelgehäusesegmenten vorgesehen sein, wobei die Aussparungen durchströmbar ausgebildet sind.

Gemäß einer weiteren Ausführungsform der Saugmantelvorrichtung sind die mehreren Mantelgehäusesegmente im Wesentlichen quer zu der Strömungsrichtung relativ zueinander beweglich vorgesehen. Somit kann sich die Saugmantelvorrichtung quer zur Längsrichtung breiter oder schmäler erstrecken. Dabei wird insbesondere die Größe der Strömungsauslassöffnung beeinflusst.

Gemäß einer weiteren Ausführungsform der Saugmantelvorrichtung ist das Größenverhältnis von der Strömungseinlassöffnung zu der Strömungsauslassöffnung variabel ausgebildet. Dieses Größenverhältnis entspricht der mathematischen Schreibweise als Bruch (Größenverhältnis = Strömungseinlassöffnung : Strömungsauslassöffnung). Auf diese Weise kann eine fluiddynamische Saugwirkung im Inneren der Saugmantelvorrichtung verändert werden. Dies beeinflusst insbesondere das Verhältnis der Strömungsgeschwindigkeit an der Strömungseinlassöffnung im Verhältnis zu der Strömungsgeschwindigkeit an der Strömungsauslassöffnung.

Gemäß einer Weiterbildung der Saugmantelvorrichtung weist das Größenverhältnis in der ersten Extremalstellung ein Minimum und in der zweiten Extremalstellung ein Maximum auf. Somit weist die erste Extremalstellung die geringste Differenz der Strömungsgeschwindigkeiten zwischen der Strömungseinlassöffnung und der Strömungsauslassöffnung auf. Die zweite Extremalstellung weist dabei die höchste Differenz der Strömungsgeschwindigkeiten zwischen der Strömungseinlassöffnung und der Strömungsauslassöffnung auf.

Gemäß einer weiteren Ausführungsform der Saugmantelvorrichtung ist die Strömungseinlassöffnung kleiner als die Strömungsauslassöffnung, um eine fluiddynamische Saugwirkung im Inneren der Saugmantelvorrichtung zu erzeugen. Somit wirkt die Saugmantelvorrichtung nach dem Prinzip eines Diffusors.

Gemäß einer weiteren Ausführungsform der Saugmantelvorrichtung überlappen sich die mehreren Mantelgehäusesegmente teilweise in einem Überlappungsbereich und berühren sich in dem Überlappungsbereich. Somit können sich die Mantelgehäusesegmente in einem festgelegten Bereich relativ zueinander bewegen ohne dabei in dem Mantelkörper unerwünschte Aussparungen/Lücken bereitzustellen, durch welche ein Fluid strömen könnte. Ferner kann auf diese Weise die Stabilität der Saugmantelvorrichtung erhöht werden.

Gemäß einer weiteren Ausführungsform der Saugmantelvorrichtung weist zumindest eines der mehreren Mantelgehäusesegmente an seiner Außenseite eine Strömungsablenkungseinrichtung auf, die dazu ausgebildet ist, den fluidmechanischen Widerstand gegen ein vorbeiströmendes Fluid zu erhöhen. Auf diese Weise kann das an der Außenseite vorbeiströmende Fluid abgebremst werden. Dies kann dazu führen, dass das Fluid versucht einen Weg mit geringerem fluidmechanischem Widerstand zu wählen und sich die Strömungsgeschwindigkeit an der Strömungseinlassöffnung erhöht.

Gemäß einer Ausführungsform des kinetischen Strömungskraftwerks weist die Betriebsspannung maximal 60 V auf. Somit können die Kosten für elektronische Komponenten verringert und elektrische Gefahren durch Defekte reduziert werden.

Gemäß einer Ausführungsform weist das kinetische Strömungskraftwerk ferner ein regelbares Tiefenruder zur Regulierung der Schwimmtiefe im Gewässer auf, welches in einem Randbereich bezogen auf die Längsrichtung des Strömungskraftwerks angeordnet ist. Somit kann auf sich verändernde Umgebungsbedingungen reagiert werden. Insbesondere können bei außergewöhnlichen Zuständen, wie Hochwasser oder Vereisungen Beschädigungen oder Betriebsstörungen verringert werden.

Die obigen Ausführungsformen und Weiterbildungen lassen sich, sofern sinnvoll, beliebig miteinander kombinieren. Weitere mögliche Ausführungsformen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand von Ausführungsbeispielen unter Bezugnahme auf die beiliegenden Figuren der Zeichnungen näher erläutert. Von den Figuren zeigen:
- Fig. 1A, 1B: schematische Draufsichten einer Saugmantelvorrichtung mit Mantelgehäusesegmenten gemäß Ausführungsbeispielen der Erfindung;
- Fig. 2: eine schematische Rückansicht einer Saugmantelvorrichtung in der zweiten Extremalstellung gemäß dem Ausführungsbeispiel nach Fig. 1A;
- Fig. 3A, 3B, 3C, 3D: eine schematische Rückansicht einer Saugmantelvorrichtung in der ersten Extremalstellung gemäß dem Ausführungsbeispiel nach Fig. 2, wobei die Rückstellkraft jeweils mit federelastischen Mantelgehäusesegmenten (Fig. 3A), einer Federeinrichtung (Fig. 3B), zwei Aktuatoren (Fig. 3C) oder einem Aktuator (Fig. 3D) unterstützt wird;
- Fig. 4A, 4B: schematische Draufsichten einer Saugmantelvorrichtung mit schwenkbaren Mantelgehäusesegmenten gemäß einem weiteren Ausführungsbeispiel der Erfindung, wobei sich die Mantelgehäusesegmente in Fig. 4A in der zweiten Extremalstellung und in Fig. 4B in der ersten Extremalstellung befinden;
- Fig. 5A, 5B: schematische Rückansichten der Saugmantelvorrichtung gemäß dem Ausführungsbeispiel nach Fig. 4A bzw. 4B;
- Fig. 6A, 6B: schematische Draufsichten einer Saugmantelvorrichtung mit auseinanderziehbaren Mantelgehäusesegmenten gemäß einem weiteren Ausführungsbeispiel der Erfindung, wobei sich die Mantelgehäusesegmente in Fig. 6A in der ersten Extremalstellung und in Fig. 6B in der zweiten Extremalstellung befinden;
- Fig. 7: eine schematische Rückansicht der Saugmantelvorrichtung gemäß dem Ausführungsbeispiel nach Fig. 6A; und
- Fig. 8A, 8B, 8C: schematische Ansichten (Fig. 8A: Seitenansicht; Fig. 8B: Draufsicht; Fig. 8C: isometrische Ansicht) eines kinetischen Strömungskraftwerks gemäß einem Ausführungsbeispiel der Erfindung.

In den Figuren der Zeichnung sind gleiche, funktionsgleiche und gleich wirkende Elemente, Merkmale und Komponenten - sofern nichts Gegenteiliges ausgeführt ist - jeweils mit denselben Bezugszeichen versehen.

Obwohl vorliegend spezifische Ausführungsformen und Weiterbildungen dargestellt und beschrieben sind, wird der Fachmann bevorzugen, dass eine Vielzahl von alternativen und/oder gleichartigen Ausführungen die dargestellten und beschriebenen spezifischen Ausführungsbeispiele ersetzen können, ohne vom Umfang der vorliegenden Erfindung abzukehren. Diese Anmeldung soll allgemein alle Abwandlungen oder Änderungen der hierin beschriebenen spezifischen Ausführungsbeispiele abdecken.

Die beiliegenden Figuren sollen ein weiteres Verständnis von Ausführungsformen der Erfindung vermitteln und dienen im Zusammenhang mit der Beschreibung der Erklärung von Prinzipien und Konzepten der Erfindung. Andere Ausführungsbeispiele und viele der genannten Vorteile ergeben sich im Hinblick auf die Zeichnungen. Die Zeichnungen sind lediglich als schematische Zeichnungen zu verstehen und die Elemente der Zeichnungen sind nicht notwendigerweise maßstabsgetreu zueinander dargestellt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

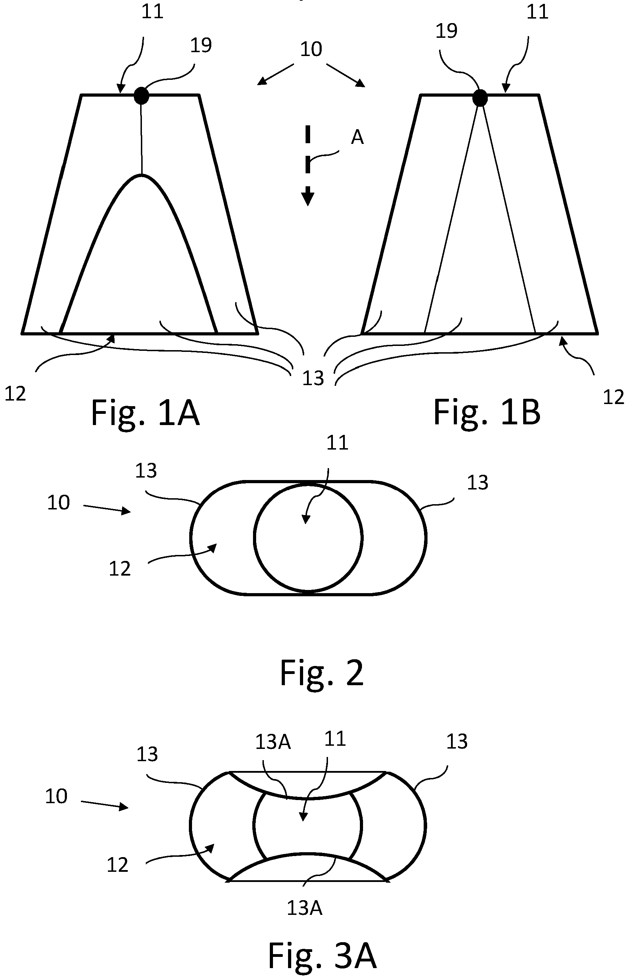

Fig. 1A und 1B zeigen schematische Draufsichten einer Saugmantelvorrichtung 10 mit mehreren Mantelgehäusesegmenten 13. Die Saugmantelvorrichtung 10 weist darüber hinaus eine Strömungseinlassöffnung 11 und eine Strömungsauslassöffnung 12 auf. In Bezug auf eine Strömungsrichtung A ist die Strömungsauslassöffnung 12 stromabwärts der Strömungseinlassöffnung 11 angeordnet. Die mehreren Mantelgehäusesegmente 13 erstrecken sich zwischen der Strömungseinlassöffnung 11 und der Strömungsauslassöffnung 12 im Wesentlichen in der Strömungsrichtung A. Dabei sind Abweichungen dieser Erstreckung der Mantelgehäusesegmente 13 bis zu in etwa 40 °, insbesondere bis zu in etwa 25 ° von der Strömungsrichtung A vorgesehen. Ferner sind die mehreren Mantelgehäusesegmente 13 derart vorgesehen, dass die mehreren Mantelgehäusesegmente 13 gemeinsam einen konisch ausgebildeten Mantelkörper formen. Dabei sind die mehreren Mantelgehäusesegmente 13 relativ zueinander zwischen einer ersten und einer zweiten Extremalstellung derart kontinuierlich beweglich, dass die Strömungsgeschwindigkeit im Inneren der Saugmantelvorrichtung 10 im Vergleich zur Umgebungsströmung regelbar ist.

Beispielhaft weist die Saugmantelvorrichtung in Fig. 1A und 1B ferner eine Gelenkeinrichtung 19 auf. Die Gelenkeinrichtung 19 unterstützt das Schwenken der Mantelgehäusesegmente 13. Wie in Fig. 1A dargestellt, können zum Beispiel zwei der vier Mantelgehäusesegmente 13 über die Gelenkeinrichtung 19 verbunden sein. Dabei ist die Gelenkeinrichtung 19 im Bereich der Strömungseinlassöffnung 11, insbesondere mit einer Schwenkachse senkrecht zur Strömungsrichtung A, angeordnet. Alternativ sind in Fig. 1B beispielhaft vier Mantelgehäusesegmente 13 an der Gelenkeinrichtung 19 angelenkt. Im Übrigen weist diese Gelenkeinrichtung 19 im Wesentlichen die gleichen Merkmale auf, die oben unter Bezugnahme auf Fig. 1A bereits beschrieben wurden. Auch wenn in diesen Ausführungsbeispielen die Saugmantelvorrichtung 10 vier Mantelgehäusesegmente 13 umfasst, ist die Erfindung nicht auf vier Mantelgehäusesegmente 13 beschränkt, sondern kann eine beliebige Vielzahl von Mantelgehäusesegmenten 13 aufweisen.

Fig. 2 zeigt eine schematische Rückansicht einer Saugmantelvorrichtung 10 in der zweiten Extremalstellung gemäß dem Ausführungsbeispiel nach Fig. 1A. Die zweite Extremalstellung kann beispielsweise einen Zustand definieren, in dem die Saugmantelvorrichtung 10 vorliegt, wenn sie keiner Fluidströmung und daraus resultierenden Kräften und/oder Momenten ausgesetzt ist.

Ferner ist die Saugmantelvorrichtung 10 optional quer zu der Strömungsrichtung A betrachtet oval ausgebildet. Alternativ oder kombiniert kann die Saugmantelvorrichtung quer zu der Strömungsrichtung A betrachtet kreisförmig oder dergleichen ausgebildet sein. Dabei können neben gekrümmten Abschnitten bereichsweise auch gerade Abschnitte enthalten sein.

Die Strömungseinlassöffnung 11 ist dabei, wie in Fig. 2 exemplarisch illustriert ist, kleiner als die Strömungsauslassöffnung 12 ausgestaltet, um eine fluiddynamische Saugwirkung im Inneren der Saugmantelvorrichtung 10 zu erzeugen.

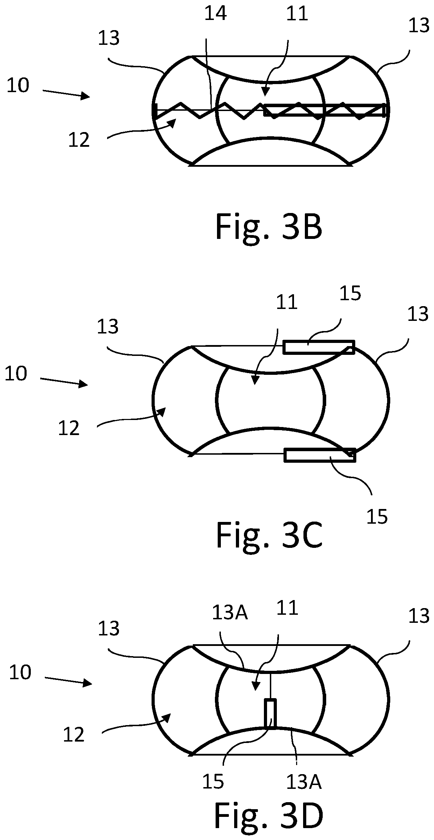

Die Fig. 3A, 3B, 3C und 3D zeigen jeweils eine schematische Rückansicht einer Saugmantelvorrichtung 10 in der ersten Extremalstellung gemäß dem Ausführungsbeispiel nach Fig. 2. Dabei sind die mehreren Mantelgehäusesegmente 13 zum Beispiel im Wesentlichen quer zu der Strömungsrichtung A relativ zueinander beweglich vorgesehen. Es ist nicht erforderlich, dass alle Mantelgehäusesegmente 13 relativ zueinander beweglich ausgebildet sind, sondern es können einzelne der mehreren Mantelgehäusesegmente 13 starr ausgebildet und/oder miteinander verbunden sein.

Darüber hinaus kann die Saugmantelvorrichtung 10 in der ersten Extremalstellung quer zu der Strömungsrichtung A betrachtet vergleichbar wie in der zweiten Extremalstellung oder verschieden zu dieser ausgebildet sein. Das heißt, die Saugmantelvorrichtung 10 kann beispielsweise in der ersten Extremaltstellung oval und in der zweiten Extremalstellung rund ausgebildet sein. Weitere Formen oder Mischformen sind denkbar.

Ferner ist zum Beispiel das Größenverhältnis von der Strömungseinlassöffnung 11 zu der Strömungsauslassöffnung 12 zwischen der ersten und der zweiten Extremalstellung variabel ausgebildet. Das bedeutet, dass sich der Quotient aus Strömungseinlassöffnung 11 und Strömungsauslassöffnung 12 durch die Bewegung der mehreren Mantelgehäusesegmente 13 zwischen der ersten und der zweiten Extremalstellung ändert. So kann wahlweise die Strömungseinlassöffnung 11 oder die Strömungsauslassöffnung 12 ihre Größe beibehalten, während sich die entsprechende andere Öffnung 11; 12 vergrößert bzw. verkleinert oder es ändern sich die Größen der Strömungseinlassöffnung 11 und der Strömungsauslassöffnung 12 parallel, jedoch in einem unterschiedlichen Verhältnis. Insbesondere weist das Größenverhältnis dabei in der ersten Extremalstellung ein Minimum und in der zweiten Extremalstellung ein Maximum auf. Dementsprechend verkleinert sich die Größe der Strömungsauslassöffnung 12 in den dargestellten Ausführungsbeispielen nach Fig. 3A, 3B, 3C und 3D, während die Größe der Strömungseinlassöffnung 11 nahezu konstant bleibt.

In der ersten Extremalstellung ist die Saugmantelvorrichtung 10 im Vergleich zu der zweiten Extremalstellung beispielsweise elastisch verformt. In dem Ausführungsbeispiel gemäß Fig. 3A sind zumindest einige 13A der mehreren Mantelgehäusesegmente 13 aus einem elastischen Material hergestellt. Die sogenannten elastischen Mantelgehäusesegmente 13A bewirken eine federelastische Rückstellkraft auf die Mantelgehäusesegmente 13, die mit den jeweiligen elastischen Mantelgehäusesegmenten 13A gekoppelt sind. Die federelastische Rückstellkraft beziehungsweise der federelastische Verformungswiderstand können als Federkonstante bestimmt sein. Dabei kann die Federkonstante für die elastischen Mantelgehäusesegmente 13A jeweils konstant sein. Alternativ oder zusätzlich kann sich die Materialzusammensetzung und/oder die Geometrie der elastischen Mantelgehäusesegmente 13A entlang ihrer Erstreckung derart verändern, dass die Federkonstante dieser elastischen Mantelgehäusesegmente 13A entlang ihrer Erstreckung variiert. Zum Beispiel verringert sich die Dicke eines elastischen Mantelgehäusesegments 13A in Richtung der Strömungsrichtung A, damit das elastische Mantelgehäusesegment 13A in Strömungsrichtung A betrachtet eine zunehmende Verformung aufweist.

Fig. 3B zeigt beispielhaft eine Saugmantelvorrichtung 13 mit einer Federeinrichtung 14. Dabei ist die Federeinrichtung 14 insbesondere innerhalb der Saugmantelvorrichtung 10 angeordnet. Zum Beispiel koppelt die Federeinrichtung 14 zwei der mehreren Mantelgehäusesegmente 13, welche sich gegenüberliegen. Somit kann die Federeinrichtung 14 in Abhängigkeit des vorgesehenen Spannungszustandes die Bewegungen der mehreren Mantelgehäusesegmente 13 unterstützen oder hemmen. Optional kann die Federeinrichtung 14 mit einem Dämpfer gekoppelt sein.

In Fig. 3C sind beispielhaft zwei Aktuatoren 15 zum Unterstützen der Beweglichkeit der mehreren Mantelgehäusesegmente 13 zwischen der ersten und der zweiten Extremalstellung in der Saugmantelvorrichtung 10 enthalten. Dabei sind die Aktuatoren 15 insbesondere außerhalb der Saugmantelvorrichtung 10 angeordnet. Zum Beispiel koppeln die Aktuatoren 15 jeweils zwei Übergangsstellen zwischen den elastischen Mantelgehäusesegmenten 13A und den übrigen Mantelgehäusesegmenten 13. Somit kann der Aktuator 15 in Abhängigkeit von mittels eines Sensors gemessenen Daten, insbesondere Leistungsdaten der Turbine und/oder Wetterdaten, die Bewegungen der mehreren Mantelgehäusesegmente 13 unterstützen.

Die Ausführungsvariante nach Fig. 3D zeigt beispielhaft eine Saugmantelvorrichtung 13 mit einem Aktuator 15, welcher innerhalb der Saugmantelvorrichtung 10 angeordnet ist. Der Aktuator 15 koppelt dabei zwei elastische Mantelgehäusesegmente 13A. Somit kann die Bewegung der elastischen Mantelgehäusesegmente 13A direkt unterstützt werden.

Dem Fachmann ist klar, dass an jeder Stelle, an der eine Federeinrichtung 14 vorgesehen ist, gleichermaßen ein Aktuator 15 angewendet werden kann. Das umgekehrte Prinzip gilt ebenfalls, genauso wie eine beliebige Kombination von Federeinrichtung 14 und Aktuator 15 in derselben Saugmantelvorrichtung 10.

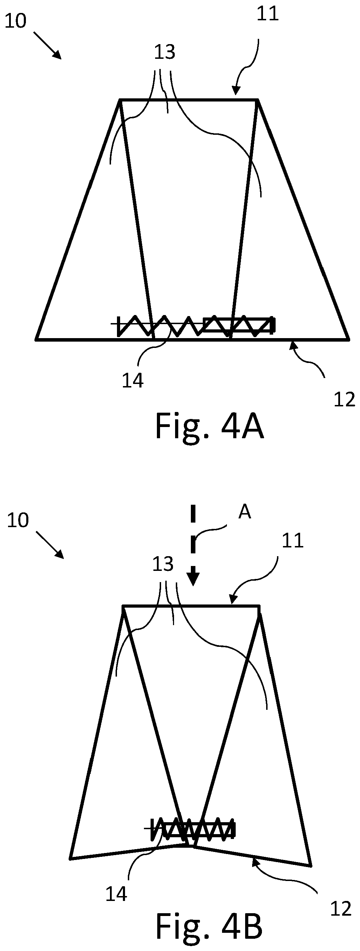

Fig. 4A und 4B zeigen schematische Draufsichten einer Saugmantelvorrichtung 10 mit schwenkbaren Mantelgehäusesegmenten 13. Optional sind die Mantelgehäusesegmente 13 jeweils starr ausgebildet. Dabei sind insbesondere zwei seitliche Mantelgehäusesegmente 13 an zumindest zwei mittleren Mantelgehäusesegmenten 13 schwenkbar angelenkt. In Fig. 4A sind insbesondere die Mantelgehäusesegmente 13 in der zweiten Extremalstellung illustriert. In Fig. 4B befinden sich die Mantelgehäusesegmente 13 hingegen in der ersten Extremalstellung.

In der ersten und in der zweiten Extremalstellung ist die Strömungseinlassöffnung 11 kleiner ist als die Strömungsauslassöffnung 12, um eine fluiddynamische Saugwirkung im Inneren der Saugmantelvorrichtung 10 zu erzeugen. Die Größe der Strömungseinlassöffnung 11 ist gemäß den Ausführungsbeispielen nach Fig. 4A und 4B konstant. Da die zweite Extremalstellung eine größere Strömungsauslassöffnung 12 aufweist als die erste Extremalstellung, bewirkt die zweite Extremalstellung hier eine stärkere Saugwirkung als die erste Extremalstellung.

Ferner weist die Saugmantelvorrichtung 10 beispielhaft zwei Federeinrichtungen 14 auf. Die Federeinrichtungen 14 weisen dabei eine Wirkrichtung quer zur Strömungsrichtung A auf.

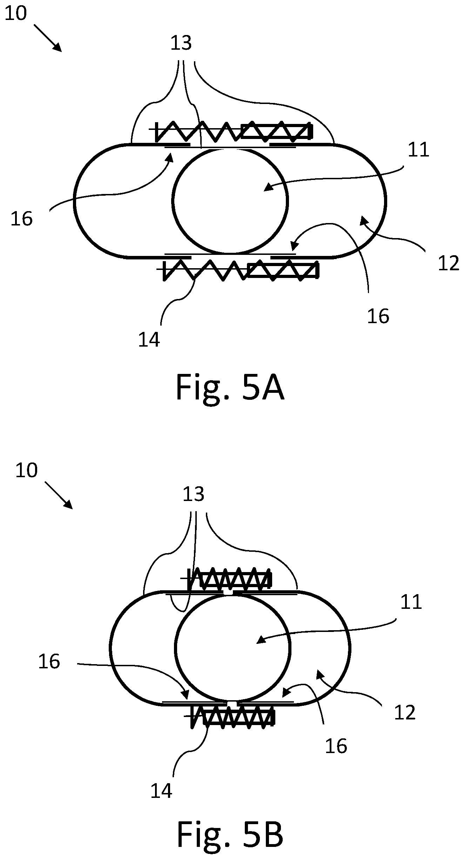

Fig. 5A und 5B zeigen schematische Rückansichten der Saugmantelvorrichtung 10 gemäß dem Ausführungsbeispiel nach Fig. 4A bzw. 4B. Insbesondere sind darin die zwei seitlichen Mantelgehäusesegmente 13 dargestellt, die sich teilweise in einem Überlappungsbereich 16 mit den mittleren Mantelgehäusesegmenten 13 überlappen und in dem Überlappungsbereich 16 berühren. Exemplarisch sind sie Federeinrichtungen 14 außerhalb der Saugmantelvorrichtung 10 angeordnet, jedoch nicht auf diese Anordnung beschränkt, sondern ebenso innerhalb der Saugmantelvorrichtung 10 oder in einer anderen Ausrichtung anordenbar.

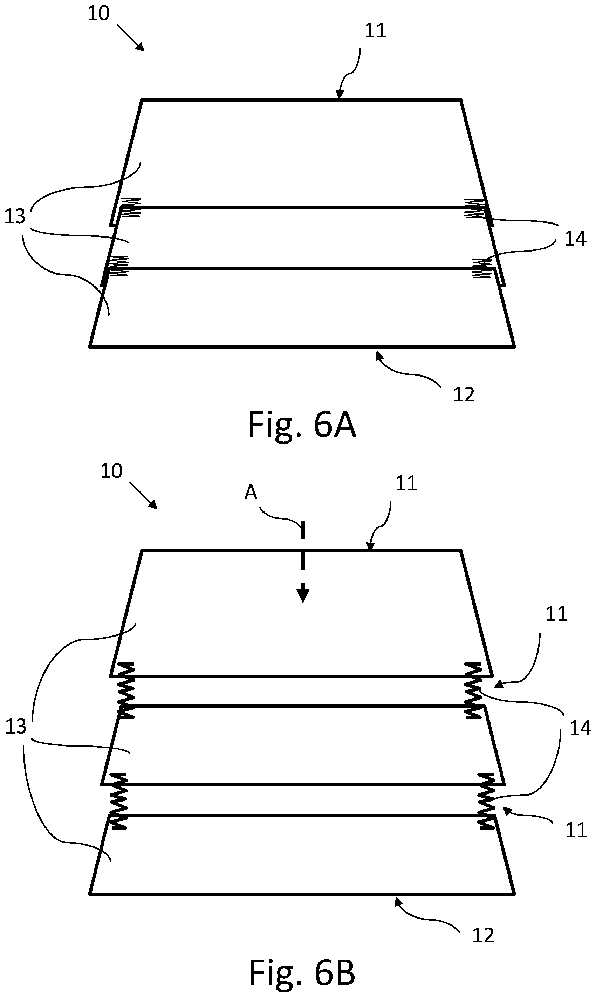

Fig. 6A und 6B zeigen schematische Draufsichten einer Saugmantelvorrichtung 10 mit auseinanderziehbaren Mantelgehäusesegmenten 13. Dabei befinden sich die Mantelgehäusesegmente 13 in Fig. 6A in der ersten Extremalstellung und in Fig. 6B in der zweiten Extremalstellung. Insbesondere sind die mehreren Mantelgehäusesegmente 13 dabei im Wesentlichen entlang der Strömungsrichtung A relativ zueinander beweglich vorgesehen. Die drei abgebildeten Mantelgehäusesegmente 13 sind beispielsweise durch je zwei Federeinrichtungen 14 miteinander gekoppelt. Jedes der drei Mantelgehäusesegmente 13 weist zum Beispiel eine konisch ausgebildete Grundform auf.

Dabei ist das Größenverhältnis von der Strömungseinlassöffnung 11 zu der Strömungsauslassöffnung 12 zum Beispiel variabel ausgebildet. Das bedeutet, dass sich der Quotient aus Strömungseinlassöffnung 11 und Strömungsauslassöffnung 12 durch die Bewegung der mehreren Mantelgehäusesegmente 13 zwischen der ersten und der zweiten Extremalstellung ändert. So kann wahlweise die Strömungseinlassöffnung 11 oder die Strömungsauslassöffnung 12 ihre Größe beibehalten, während sich die entsprechende andere Öffnung 11; 12 vergrößert bzw. verkleinert oder es ändern sich die Größen der Strömungseinlassöffnung 11 und der Strömungsauslassöffnung 12 parallel, jedoch in einem unterschiedlichen Verhältnis. Insbesondere weist das Größenverhältnis in der ersten Extremalstellung ein Minimum und in der zweiten Extremalstellung ein Maximum auf. Dementsprechend vergrößert sich die Größe der Strömungseinlassöffnung 11 in den dargestellten Ausführungsbeispielen nach Fig. 6A und 6B von der ersten zu der zweiten Extremalstellung, während die Größe der Strömungsauslassöffnung 12 konstant bleibt.

In Fig. 6A ist die Strömungseinlassöffnung 11 exemplarisch kleiner als die Strömungsauslassöffnung 12, um eine fluiddynamische Saugwirkung im Inneren der Saugmantelvorrichtung 10 zu erzeugen. Insbesondere bildet die Strömungseinlassöffnung 11 eine zusammenhängende Fläche. Dabei überlappen sich zum Beispiel die drei Mantelgehäusesegmente 13 teilweise in einem Überlappungsbereich 16, wobei die Überlappungsbereiche beispielsweise mit den Randbereichen der Mantelgehäusesegmente 13 korrespondieren. Zusätzlich berühren sich die Mantelgehäusesegmente 13 in dem Überlappungsbereich 16, damit der Überlappungsbereich 16 fluiddicht ist. Optional oder zusätzlich kann der Überlappungsbereich 16 Dichtelemente, wie Gummilippen, Dichtringe oder dergleichen, aufweisen.

Fig. 6B zeigt die Saugmantelvorrichtung 10 insbesondere in der zweiten Extremalstellung. In der zweiten Extremalstellung gemäß diesem Ausführungsbeispiel sind die drei Mantelgehäusesegmente 13 derart relativ zueinander in der Strömungsrichtung A verschoben, dass zwischen den Mantelgehäusesegmenten 13 zusätzliche Strömungseinlassöffnungen 11 bereitgestellt sind. Durch die zusätzlichen Strömungseinlassöffnungen 11 kann ein Fluid von der Seite in die Saugmantelvorrichtung 10 strömen. Somit wird die Saugwirkung reduziert. Mit sinkender Strömungsgeschwindigkeit des Fluids verringern sich auch die zusätzlichen Strömungseinlassöffnungen 11 bis sie ab einem bestimmten Wert geschlossen sind.

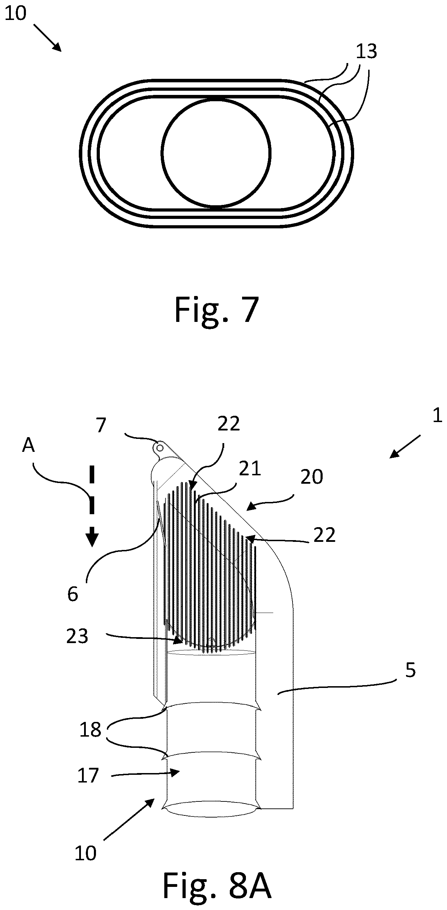

Fig. 7 zeigt eine schematische Rückansicht der Saugmantelvorrichtung 10 gemäß dem Ausführungsbeispiel nach Fig. 6A. Dabei ist beispielsweise der Querschnitt der Mantelgehäusesegmente 13 in der ersten und in der zweiten Extremalstellung im Wesentlichen identisch.

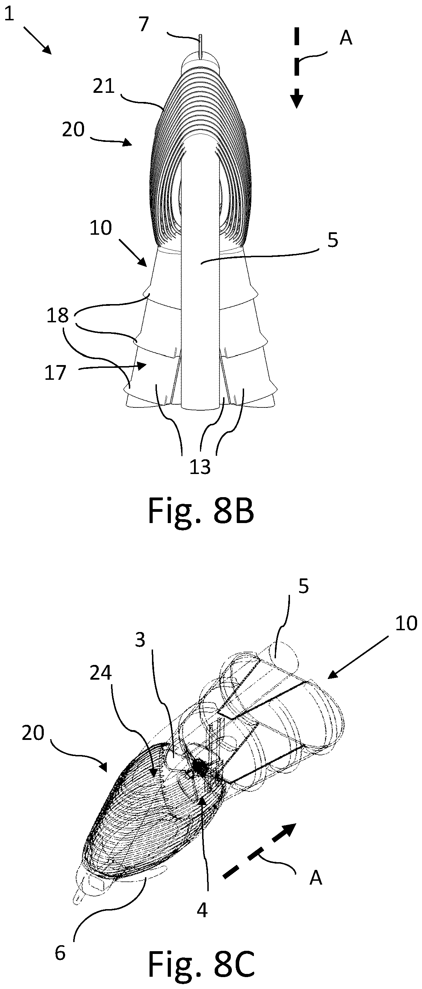

Fig. 8A, 8B und 8C zeigen schematische Ansichten eines kinetischen Strömungskraftwerks 1. Das Strömungskraftwerk 1 umfasst einen Strömungsgenerator 2, eine Rechenvorrichtung 20 und eine Saugmantelvorrichtung 10.

Der Strömungsgenerator 2 weist beispielsweise einen Rotor 3 auf, dessen Rotationsachse in etwa der Strömungsrichtung A bzw. der Längsachse des Strömungskraftwerks 1 entspricht. Der Rotor 3 kann abschnittsweise von der Saugmantelvorrichtung 10 umgeben sein.

Die Rechenvorrichtung 20 ist entlang einer Strömungsrichtung A stromaufwärts vor einem Strömungseinlass 4 des Strömungsgenerators 2 angeordnet und dazu ausgebildet, den Strömungsgenerator 2 vor festen Fremdkörpern zu schützen. Der Strömungseinlass 4 ist insbesondere in Fig. 8C gezeigt.

Beispielhaft kann die Rechenvorrichtung 20 mehrere Gitterelemente 21 umfassen, welche sich entlang der Strömungsrichtung A von einem ersten Körper 5 zu einem zweiten Körper 2; 10 erstrecken. Dabei sind beispielsweise die mehreren Gitterelemente 21 jeweils mit einem ersten Ende 22 an dem ersten Körper 5 und mit einem zweiten Ende 23 an dem zweiten Körper 2; 10 befestigt. Zusätzlich können die Gitterelemente 21 derart gebogen vorgesehen sein, dass sie zusammen mit dem ersten und dem zweiten Körper einen Hohlraum 24 umgeben, wie insbesondere in Fig. 8C dargestellt ist.

Auf diese Weise kann der Strömungseinlass 4 des Strömungsgenerators 2 durch die Rechenvorrichtung 20 derart vor Fremdkörpern geschützt werden, dass neben schädigenden Festkörpern auch Wasserlebewesen, wie beispielsweise Fische, die durch den Strömungseinlass 4 des Strömungsgenerators 2 hindurch gezogen werden könnten, verringert werden. Dabei kann die Rechenvorrichtung 20 ausgebildet sein, eine hinreichende Fluidströmung in der Strömungsrichtung A durchzulassen und dem Strömungsgenerator 2 bereitzustellen, damit dieser in einem optimalen Betriebspunkt betreibbar ist.

Die Gitterelemente 21 sind nicht auf ein bestimmtes Material, eine bestimmte Form oder einen bestimmten Querschnitt beschränkt. Die Gitterelemente 21 können beliebig Metall, Leichtmetall, Kunststoff, Holz oder ähnliches oder Verbundmaterialien aufweisen. Ferner können die Gitterelemente 21 einen vieleckigen, runden, ovalen, röhrenartigen oder ähnlichen Querschnitt aufweisen. Einzelne der mehreren Gitterelemente 21 können in ihrer Ausgestaltung von den anderen Gitterelementen 21 verschieden sein und/oder entlang ihrer Längserstreckung in Material und/oder Form bzw. Querschnitt variieren. Vorzugsweise können die Gitterelemente 21 als Blechstreifen, Stäbe oder dergleichen ausgebildet sein.

Der Hohlraum 24 im Sinne der vorliegenden Erfindung bezeichnet einen Volumenraum, welcher von den mehreren Gitterelementen 21 sowie gegebenenfalls zusätzlich von dem ersten und/oder zweiten Körper derart umgeben ist, dass dieser Hohlraum/Volumenraum 24 von einem Fluid in der Strömungsrichtung A durchströmbar ist, wobei feste Fremdkörper ab einer gewissen Größe von der Rechenvorrichtung 20 daran gehindert werden, in den Hohlraum 24 einzudringen.

Die Saugmantelvorrichtung 10 ist stromabwärts des Strömungsgenerators 2 angeordnet. Zusätzlich korrespondiert ihre Strömungseinlassöffnung 11 mit den Außenmaßen des Strömungsgenerators 2. Im Wesentlichen entspricht die Saugmantelvorrichtung 10 der Saugmantelvorrichtung gemäß dem Ausführungsbeispiel nach Fig. 4A, 5A bzw. 4B, 5B. Darüber hinaus kann die Saugmantelvorrichtung 10 zum Beispiel auch nachfolgend beschriebene Merkmale aufweisen.

Ferner weist die Saugmantelvorrichtung 10 beispielsweise sechs, acht oder zehn Mantelgehäusesegmente 13 auf. Dabei weist zumindest eines der Mantelgehäusesegmente 13 an seiner Außenseite 17 jeweils eine Strömungsablenkungseinrichtung 18 auf, wie insbesondere in Fig. 8A und 8B dargestellt ist. Die Strömungsablenkungseinrichtung 18 ist dazu ausgebildet, den fluidmechanischen Widerstand gegen ein vorbeiströmendes Fluid zu erhöhen. Auf diese Weise wird das vorbeiströmende Fluid gebremst, folglich wählt das Fluid zum Beispiel den Weg des geringeren Widerstands und strömt durch den Strömungsgenerator 2 in die Saugmantelvorrichtung 10, was die Leistungsausbeute des Strömungsgenerators 2 vorteilhaft erhöht.

Des Weiteren kann die Betriebsspannung zum Beispiel maximal 60 V aufweisen.

Zusätzlich kann das Strömungskraftwerk 1 einen Frontkörper 5 umfassen. Der Frontkörper 5 ist beispielsweise stromaufwärts des Strömungsgenerators 2 angeordnet und mit dem Strömungsgenerator 2 verbunden. Alternativ oder zusätzlich kann der Frontkörper 5 mit der Saugmantelvorrichtung 10 verbunden sein. Somit kann der Frontkörper die Stabilität des Strömungskraftwerks erhöhen. Ferner kann der Frontkörper 5 beispielsweise als Auftriebskörper zum Verhindern des Sinkens des Strömungskraftwerks 1 ausgebildet sein. Dabei kann der Frontkörper zum Beispiel aus einem Material oder einer Materialkombination mit einer Dichte von weniger als 997 kg/m³ hergestellt sein. Alternativ oder zusätzlich kann der Frontkörper Gaseinschlüsse enthalten, deren Auftriebswirkung groß genug ist, um das Gesamtgewicht des Strömungskraftwerks zu kompensieren.

Darüber hinaus kann das Strömungskraftwerk 1 ein regelbares Tiefenruder 6 zur Regulierung der Schwimmtiefe im Gewässer aufweisen. Das regelbare Tiefenruder ist beispielsweise in einem vorderen Bereich bezogen auf die Längsrichtung A des Strömungskraftwerks 1 angeordnet. Insbesondere kann das Tiefenruder 6 zum Beispiel als Flosse ausgebildet sein, die horizontal ausgerichtet ist.

Optional kann das Strömungskraftwerk 1 eine Befestigungseinrichtung 7 aufweisen. Die Befestigungseinrichtung 7 ist beispielsweise im vorderen Bereich, insbesondere an einer Nase, des Strömungskraftwerks 1 positioniert. Zum Beispiel kann die Befestigungseinrichtung 7 als Öse, Haken, Schlaufe oder ähnliches ausgebildet sein. Somit ist das Strömungskraftwerk 1 an einem Fixpunkt in der Umgebung befestigbar.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Strömungskraftwerk
- 2: Strömungsgenerator
- 3: Rotor
- 4: Strömungseinlass
- 5: Frontkörper
- 6: Tiefenruder
- 7: Befestigungseinrichtung
- 10: Saugmantelvorrichtung
- 11: Strömungseinlassöffnung
- 12: Strömungsauslassöffnung
- 13: Mantelgehäusesegmente (elastische 13A)
- 14: Federeinrichtung
- 15: Aktuator
- 16: Überlappungsbereich
- 17: Außenseite
- 18: Strömungsablenkungseinrichtung
- 19: Gelenkeinrichtung
- 20: Rechenvorrichtung
- 21: Gitterelemente
- 22: erstes Ende
- 23: zweites Ende
- 24: Hohlraum
- 25: Abstand
- A: Strömungsrichtung/Längsrichtung

## Patentansprüche

1. Saugmantelvorrichtung (10) für ein kinetisches Strömungskraftwerk (1), mit:
einer Strömungseinlassöffnung (11) und einer Strömungsauslassöffnung (12), welche entlang einer Strömungsrichtung (A) stromabwärts der Strömungseinlassöffnung (11) angeordnet ist; und
mehreren Mantelgehäusesegmenten (13), welche sich zwischen der Strömungseinlassöffnung (11) und der Strömungsauslassöffnung (12) im Wesentlichen in der Strömungsrichtung (A) erstrecken und derart vorgesehen sind, dass die mehreren Mantelgehäusesegmente (13) gemeinsam einen konisch ausgebildeten Mantelkörper formen, wobei die mehreren Mantelgehäusesegmente (13) relativ zueinander zwischen einer ersten und einer zweiten Extremalstellung derart kontinuierlich beweglich sind, dass die Strömungsgeschwindigkeit im Inneren der Saugmantelvorrichtung (10) im Vergleich zur Umgebungsströmung regelbar ist, wobei zumindest einige (13A) der mehreren Mantelgehäusesegmente (13) aus einem elastischen Material hergestellt sind, und wobei die elastischen Mantelgehäusesegmente (13A) bei einer ansteigenden Strömungsgeschwindigkeit zunehmend elastisch verformt werden und sich bei einer sinkenden Strömungsgeschwindigkeit reversibel zurückformen.

2. Saugmantelvorrichtung nach Anspruch 1, wobei die Saugmantelvorrichtung (10) quer zu der Strömungsrichtung (A) betrachtet oval, kreisförmig oder dergleichen ausgebildet ist.

3. Saugmantelvorrichtung nach Anspruch 1 oder 2, wobei sich die Materialzusammensetzung und/oder die Geometrie der elastischen Mantelgehäusesegmente (13A) entlang ihrer Erstreckung derart verändert, dass die Federkonstante dieser elastischen Mantelgehäusesegmente (13A) entlang ihrer Erstreckung variiert.

4. Saugmantelvorrichtung nach wenigstens einem der vorhergehenden Ansprüche, ferner aufweisend eine Federeinrichtung (14) und/oder einen Aktuator (15) zum Unterstützen der Beweglichkeit der mehreren Mantelgehäusesegmente (13) zwischen der ersten und der zweiten Extremalstellung, wobei die Federeinrichtung (14) und/oder der Aktuator (15) zumindest einige der mehreren Mantelgehäusesegmente (13) untereinander koppelt.

5. Saugmantelvorrichtung nach wenigstens einem der vorhergehenden Ansprüche, wobei die mehreren Mantelgehäusesegmente (13) im Wesentlichen entlang der Strömungsrichtung (A) relativ zueinander beweglich vorgesehen sind.

6. Saugmantelvorrichtung nach wenigstens einem der Ansprüche 1 bis 4, wobei die mehreren Mantelgehäusesegmente (13) im Wesentlichen quer zu der Strömungsrichtung (A) relativ zueinander beweglich vorgesehen sind.

7. Saugmantelvorrichtung nach wenigstens einem der vorhergehenden Ansprüche, wobei das Größenverhältnis von der Strömungseinlassöffnung (11) zu der Strömungsauslassöffnung (12) variabel ausgebildet ist.

8. Saugmantelvorrichtung nach Anspruch 7, wobei das Größenverhältnis in der ersten Extremalstellung ein Minimum und in der zweiten Extremalstellung ein Maximum aufweist.

9. Saugmantelvorrichtung nach wenigstens einem der vorhergehenden Ansprüche, wobei die Strömungseinlassöffnung (11) kleiner ist als die Strömungsauslassöffnung (12), um eine fluiddynamische Saugwirkung im Inneren der Saugmantelvorrichtung (10) zu erzeugen.

10. Saugmantelvorrichtung nach wenigstens einem der vorhergehenden Ansprüche, wobei sich die mehreren Mantelgehäusesegmente (13) teilweise in einem Überlappungsbereich (16) überlappen und in dem Überlappungsbereich (16) berühren.

11. Saugmantelvorrichtung nach wenigstens einem der vorhergehenden Ansprüche, wobei zumindest eines der mehreren Mantelgehäusesegmente (13) an seiner Außenseite (17) eine Strömungsablenkungseinrichtung (18) aufweist, die dazu ausgebildet ist, den fluidmechanischen Widerstand gegen ein vorbeiströmendes Fluid zu erhöhen.

12. Kinetisches Strömungskraftwerk (1) mit:
einem Strömungsgenerator (2);
einer Rechenvorrichtung (20), welche entlang einer Strömungsrichtung (A) stromaufwärts vor einem Strömungseinlass (4) des Strömungsgenerators (2) angeordnet und dazu ausgebildet ist, den Strömungsgenerator (2) vor festen Fremdkörpern zu schützen; und
einer Saugmantelvorrichtung (10) nach einem der vorhergehenden Ansprüche, welche stromabwärts des Strömungsgenerators (2) angeordnet ist und deren Strömungseinlassöffnung (11) mit den Außenmaßen des Strömungsgenerators (2) korrespondiert.

13. Strömungskraftwerk nach Anspruch 12, wobei die Betriebsspannung maximal 60 V aufweist.

14. Strömungskraftwerk nach Anspruch 12 oder 13, ferner aufweisend ein regelbares Tiefenruder (6) zur Regulierung der Schwimmtiefe im Gewässer, welches in einem Randbereich bezogen auf die Längsrichtung (A) des Strömungskraftwerks (1) angeordnet ist.

## Claims

1. Suction jacket device (10) for a kinetic flow power plant (1), having: a flow inlet opening (11) and a flow outlet opening (12), which is arranged downstream of the flow inlet opening (11) along a flow direction (A); and
a plurality of jacket housing segments (13), which extend between the flow inlet opening (11) and the flow outlet opening (12) essentially in the flow direction (A) and are provided in such a manner that the plurality of jacket housing segments (13) jointly form a conically formed jacket body, wherein the plurality of jacket housing segments (13) are continuously movable relative to one another between a first and a second extreme position in such a manner that the flow velocity in the interior of the suction jacket device (10) can be regulated in comparison to the ambient flow, wherein at least some (13A) of the plurality of jacket housing segments (13) are produced from an elastic material, and wherein the elastic jacket housing segments (13A) are increasingly elastically deformed as the flow velocity increases and reform themselves in a reversible manner as the flow velocity decreases.

2. Suction jacket device according to claim 1, wherein the suction jacket device (10) is oval, circular or the like, as viewed transversely with respect to the flow direction (A).

3. Suction jacket device according to claim 1 or 2, wherein the material composition and/or the geometry of the elastic jacket housing segments (13A) changes along their extent in such a manner that the spring constant of these elastic jacket housing segments (13A) varies along their extent.

4. Suction jacket device according to at least one of the preceding claims, further comprising a spring device (14) and/or an actuator (15) for supporting the movability of the plurality of jacket housing segments (13) between the first and the second extreme position, wherein the spring device (14) and/or the actuator (15) couples at least some of the plurality of jacket housing segments (13) to one another.

5. Suction jacket device according to at least one of the preceding claims, wherein the plurality of jacket housing segments (13) are provided so as to be movable relative to one another essentially along the flow direction (A).

6. Suction jacket device according to at least one of claims 1 to 4, wherein the plurality of jacket housing segments (13) are provided so as to be movable relative to one another essentially transversely with respect to the flow direction (A).

7. Suction jacket device according to at least one of the preceding claims, wherein the size ratio of the flow inlet opening (11) to the flow outlet opening (12) is variable.

8. Suction jacket device according to claim 7, wherein the size ratio comprises a minimum in the first extreme position and a maximum in the second extreme position.

9. Suction jacket device according to at least one of the preceding claims, wherein the flow inlet opening (11) is smaller than the flow outlet opening (12) in order to generate a fluid-dynamic suction effect inside the suction jacket device (10).

10. Suction jacket device according to at least one of the preceding claims, wherein the plurality of jacket housing segments (13) partially overlap in an overlapping region (16) and touch in the overlapping region (16).

11. Suction jacket device according to at least one of the preceding claims, wherein at least one of the plurality of jacket housing segments (13) comprises on its outer side (17) a flow deflection device (18), which is designed to increase the fluid-mechanical resistance to a fluid that is flowing past.

12. Kinetic flow power plant (1) having:
a flow generator (2);
a computing device (20) that is arranged upstream of a flow inlet (4) of the flow generator (2) along a flow direction (A) and is embodied so as to protect the flow generator (2) from solid foreign bodies; and
a suction jacket device (10) according to one of the preceding claims, which is arranged downstream of the flow generator (2) and whose flow inlet opening (11) corresponds to the outer dimensions of the flow generator (2).

13. Flow power plant according to claim 12, wherein the operating voltage comprises a maximum of 60 V.

14. Flow power plant according to claim 12 or 13, further comprising a controllable depth rudder (6) for regulating the floating depth in the body of water, which is arranged in an edge region with respect to the longitudinal direction (A) of the flow power plant (1).

## Revendications

1. Dispositif d'enveloppe d'aspiration (10) pour une centrale hydrolienne cinétique (1), comportant :
une ouverture d'entrée d'écoulement (11) et une ouverture de sortie d'écoulement (12) qui est disposée en aval de l'ouverture d'entrée d'écoulement (11) le long d'une direction d'écoulement (A) ; et
plusieurs segments de carter d'enveloppe (13) qui s'étendent entre l'ouverture d'entrée d'écoulement (11) et l'ouverture de sortie d'écoulement (12) sensiblement dans la direction d'écoulement (A) et sont prévus de telle sorte que lesdits plusieurs segments de carter d'enveloppe (13) forment ensemble un corps d'enveloppe de forme conique, lesdits plusieurs segments de carter d'enveloppe (13) étant mobiles de manière continue les uns par rapport aux autres entre une première et une seconde position extrême, de telle sorte que la vitesse d'écoulement à l'intérieur du dispositif d'enveloppe d'aspiration (10) est réglable par rapport à l'écoulement ambiant, au moins certains (13A) desdits plusieurs segments d'enveloppe (13) étant fabriqués dans un matériau élastique, et les segments d'enveloppe élastiques (13A) étant de plus en plus déformés élastiquement lorsque la vitesse d'écoulement augmente et se reformant de manière réversible lorsque la vitesse d'écoulement diminue.

2. Dispositif d'enveloppe d'aspiration selon la revendication 1, dans lequel le dispositif d'enveloppe d'aspiration (10) est de forme ovale, circulaire ou analogue, vu transversalement à la direction d'écoulement (A).

3. Dispositif d'enveloppe d'aspiration selon la revendication 1 ou 2, dans lequel la composition de matériau et/ou la géométrie des segments d'enveloppe élastiques (13A) changent le long de leur extension de telle sorte que la constante d'élasticité de ces segments d'enveloppe élastiques (13A) varie le long de leur extension.

4. Dispositif d'enveloppe d'aspiration selon au moins l'une des revendications précédentes, présentant en outre un moyen à ressort (14) et/ou un actionneur (15) pour assister la mobilité desdits plusieurs segments d'enveloppe (13) entre la première et la deuxième position extrême, le moyen à ressort (14) et/ou l'actionneur (15) couplant entre eux au moins certains desdits plusieurs segments d'enveloppe (13).

5. Dispositif d'enveloppe d'aspiration selon au moins l'une des revendications précédentes, dans lequel lesdits plusieurs segments d'enveloppe (13) sont prévus pour être mobiles les uns par rapport aux autres sensiblement le long de la direction d'écoulement (A).

6. Dispositif d'enveloppe d'aspiration selon au moins l'une des revendications 1 à 4, dans lequel lesdits plusieurs segments d'enveloppe (13) sont prévus mobiles les uns par rapport aux autres sensiblement transversalement à la direction d'écoulement (A).

7. Dispositif d'enveloppe d'aspiration selon au moins l'une des revendications précédentes, dans lequel le rapport de taille entre l'ouverture d'entrée d'écoulement (11) et l'ouverture de sortie d'écoulement (12) est conçu variable.

8. Dispositif d'enveloppe d'aspiration selon la revendication 7, dans lequel le rapport de taille présente un minimum dans la première position extrême et un maximum dans la deuxième position extrême.

9. Dispositif d'enveloppe d'aspiration selon au moins l'une des revendications précédentes, dans lequel l'ouverture d'entrée d'écoulement (11) est plus petite que l'ouverture de sortie d'écoulement (12) afin de générer un effet d'aspiration fluidodynamique à l'intérieur du dispositif d'enveloppe d'aspiration (10).

10. Dispositif d'enveloppe d'aspiration selon au moins l'une des revendications précédentes, dans lequel lesdits plusieurs segments d'enveloppe (13) se chevauchent partiellement dans une zone de chevauchement (16) et se touchent dans la zone de chevauchement (16).

11. Dispositif d'enveloppe d'aspiration selon au moins l'une des revendications précédentes, dans lequel au moins l'un desdits plusieurs segments d'enveloppe (13) présente sur sa face extérieure (17) un moyen de déviation d'écoulement (18) qui est conçu pour augmenter la résistance fluidique à un fluide en circulation.

12. Centrale hydrolienne cinétique (1) comportant :
un générateur hydrolien (2) ;
un dispositif de grille (20) qui est disposé en amont d'une entrée d'écoulement (4) du générateur hydrolien (2) le long d'une direction d'écoulement (A) et est conçu pour protéger le générateur hydrolien (2) contre des corps étrangers solides ; et
un dispositif d'enveloppe d'aspiration (10) selon l'une des revendications précédentes, qui est disposé en aval du générateur hydrolien (2) et dont l'ouverture d'entrée d'écoulement (11) correspond aux dimensions extérieures du générateur hydrolien (2).

13. Centrale hydrolienne selon la revendication 12, dont la tension de fonctionnement est de 60 V maximum.

14. Centrale hydrolienne selon la revendication 12 ou 13, présentant en outre un gouvernail de profondeur réglable (6) pour la régulation de la profondeur de flottaison dans l'eau, qui est disposé dans une zone de bordure par rapport à la direction longitudinale (A) de la centrale hydrolienne (1) .
